# FASCICULE DE BREVET EUROPEEN

(11) **EP 0 552 092 B1**
(45) Date de publication et mention de la délivrance du brevet: **02.11.1994**
(21) Numéro de dépôt: 93400060.5
(22) Date de dépôt: 13.01.1993
(51) Int. Cl.: B09B 1/00

(54) **Procédé et installation pour le stockage de déchets solidifiés**
Verfahren und Vorrichtung zum Deponieren von verfestigten Abfällen
Method and apparatus for dumping solidified wastes

(30) Priorité: 17.01.1992 FR 9200458
(43) Date de publication de la demande: 21.07.1993
(73) Titulaire: SARP INDUSTRIES, F-78520 Limay (FR)
(72) Inventeur: Biros, Jean-Louis, F-75116 Paris (FR); Gontard, Bertrand, F-75116 Paris (FR); Pichat, Philippe, F-75116 Paris (FR)
(74) Mandataire: Ballot, Paul Denis Jacques

(56) Documents cités:
- EP-A- 0 008 078
- DE-A- 3 641 780
- DE-A- 3 839 934
- DE-A- 3 840 604
- DE-A- 4 003 007
- FR-A- 2 568 608

## Description

La présente invention a trait au domaine du stockage des déchets et du dépôt de ces derniers dans des sites artificiels appropriés.

Elle concerne un nouveau procédé de stockage où les risques de pollution par des déchets toxiques sont minimisés à l'extrême ainsi qu'une installation correspondante.

On connaît les nombreux et difficiles problèmes posés par les décharges où sont déversés divers déchets souvent nocifs, le terme de décharge étant lui-même souvent associé, par les écologistes, à la pollution des sols, des eaux de surface et souterraines ainsi que de l'air environnant.

Actuellement les divers déchets, en particulier d'origine industrielle, hors les déchets nucléaires qui constituent un cas spécifique, sont disposés dans de grandes cavités à des profondeurs variables. Un tel système entraîne de nombreux inconvénients parmi lesquels il faut citer : l'impossibilité d'un examen "de visu" des déchets et de leur évolution; la grande difficulté et le coût des prises d'échantillons pour analyses périodiques normalement nécessaires; les problèmes ardus posés par le suivi qualitatif et quantitatif; des manifestations de l'évolution du stockage, telles que le lessivat, la présence de gaz malodorants, voire explosifs; la nécessité dans le cas où la décharge produit une pollution intolérable, d'extraire les déchets stockés et de les traiter, ce qui entraîne des opérations difficiles et coûteuses; enfin, le climat compréhensible de suspicion qui se développe chez les populations environnantes.

Il existe donc un besoin impératif et pressant de systèmes et ensembles de stockage où les déchets nocifs puissent être entassés sans pollution du sol, de l'eau et de l'air.

D'autre part, le document DE-A-4003007 décrit un dispositif d'étanchéification des sols comportant sur un sol tassé et en pente, une première feuille étanche, puis, une couche en béton, une seconde feuille étanche, une couche éventuellement constituée de plaques de béton armé, et une couche filtrante de drainage. Des déchets peuvent être disposés sur un tel dispositif.

Par ailleurs, le document FR-A-2568608 décrit un site de stockage de déchets comportant quatre digues en remblai définissant une alvéole sensiblement rectangulaire recouverte d'un revêtement imperméable.

L'invention permet de satisfaire aux exigences précitées et vise également d'autres buts, notamment : l'examen visuel permanent des déchets, le contrôle de leur évolution ainsi que l'analyse périodique des lixiviats des déchets lors des précipitations d'eau de pluie, la possibilité d'amenée des déchets par temps de pluie ou de neige sans risque de provoquer de pollution ; et enfin, la grande sûreté de stockage de déchets tant en ce qui concerne les aspects mécaniques et physiques du sol servant de substrat pour les déchets que la stabilité dans le temps des moyens de protection des déchets.

Pour atteindre ces buts et d'autres qui apparaîtront au cours de la présente description, le procédé de l'invention consiste, dans sa définition la plus générale : a) à stabiliser le sol sur une hauteur ou profondeur d'au moins 80 cm par ciment, laitier haut-fourneau ou équivalent en ménageant une pente de quelques degrés, puis à couler ensuite un radier de béton à hautes performances en des dalles de grandes dimensions d'au moins 1 mètre d'épaisseur, une cuvette bétonnée, débouchant sur un bassin de rétention, étant prévue sur la périphérie du radier ; b) à apporter au fur et à mesure sur le radier les déchets en les stockant sous forme de tumulus ; c) à prévoir au-dessus des déchets une couverture mobile et ajustable selon l'importance du stock, comprenant un pont roulant dont les moyens de roulement circulent dans ladite cuvette et qui est muni de rouleaux déroulables de film de matière plastique jouant le rôle de couverture.

On comprendra déjà que, dans ces conditions : on obtient, grâce à la stabilisation du sol et au radier, les fonctions recherchées de résistance mécanique, étanchéité, dans une optique de pérennité; on peut contrôler la qualité des eaux recueillies grâce aux drains autour du radier et au bassin de rétention; les déchets stockés en forme de tumulus sont aisément visibles et peuvent être surveillés "de visu"; la couverture réglable et avantageusement transparente du stock de déchets facilite la surveillance et assure également la pérennité de l'ensemble.

La stabilisation du sol préexistant peut être faite par tout moyen connu. Il s'est avéré cependant particulièrement avantageux de mettre en oeuvre comme liants, soit du ciment au laitier (norme Afnor), soit un ciment de type Portland à basse teneur en C3A. De préférence, on ajoute au liant des agents de renforcement comme par exemple des ultrafines de silice, à raison généralement de 5 à 10% du poids du ciment.

Pour réaliser un radier en béton de hautes performances, on utilise avantageusement un rapport eau/ciment inférieur à 0,35 et on met en oeuvre un superfluidifiant lors du gâchage du béton. En outre, le béton est de préférence armé, soit par un treillis métallique, soit plutôt par des nappes soudées en matière plastique et/ou des fibres, par exemple du polypropylène, de 2 à 5 cm, selon un dosage de 1Kg/M3 de béton. Le béton est coulé en dalles d'environ 15 mètres sur 15 mètres et d'un mètre d'épaisseur, ceci par exemple sur une longueur totale de 90 mètres. Les joints entre les dalles coulées en damiers alignés, sont constitués de préférence par une composition polymère à hautes performances, par exemple du chlorotrifluoréthylène ou de copolymère tétrafluoréthylène et éthylène (CFT2E). On peut aussi utiliser, à la place du béton, des déchets solidifiés et coulés sur place, selon les procédés connus en soi.

Conformément à une variante, on peut disposer sur le radier de béton ou équivalent, avant l'apport des déchets, une matière étanche à l'eau et résistante. Cette dernière peut être constituée par une feuille de copolymère CFT2E. Ce produit assure une excellente résistance aux intempéries et à la déchirure. Il est en outre antiadhérent donc autonettoyant, difficilement inflammable et il est apte à être soudé, thermoformé et, s'il y a lieu, métallisé. Sa température d'usage varie de - 50°c à + 150°c. Avantageusement, le film de CTF2E est séparé du béton par un géotextile de type connu. Conformément à une variante, le film de CTF2E peut être remplacé par une feuille multicouche ayant la propriété de se dilater et de gonfler en présence d'une petite quantité d'eau de façon à former un gel qui scelle la fuite éventuelle en empêchant les mouvements d'eau derrière la feuille ou membrane. Ainsi, cette dernière peut avantageusement être constituée par un complexe constitué par du polyéthylène haute densité, de la montmorillonite et du caoutchouc butyle.

Les dépôts successifs des déchets à stocker s'effectuent sur le radier de béton étanche en respectant la forme d'un tumulus, c'est-à-dire d'un trapèze régulier, par exemple de douze mètres de base sur cinq mètres de hauteur. La mise en place s'effectue dans un coffrage glissant sous la protection d'une couverture mobile de même longueur que celle du sol stabilisé et supporté par un pont roulant monté sur pneus qui circule dans la cuvette à la périphérie du radier. Le pont est muni sur sa face supérieure et sur ses faces latérales de rouleaux de film de matière plastique, par exemple en CTF2E qui se déroulent au fur et à mesure des besoins pour assurer la couverture du tumulus.

L'invention sera mieux comprise par la description subséquente d'un exemple, non limitatif, d'une installation de stockage de déchets conforme au procédé susvisé, par référence aux dessins annexés qui représentent schématiquement:

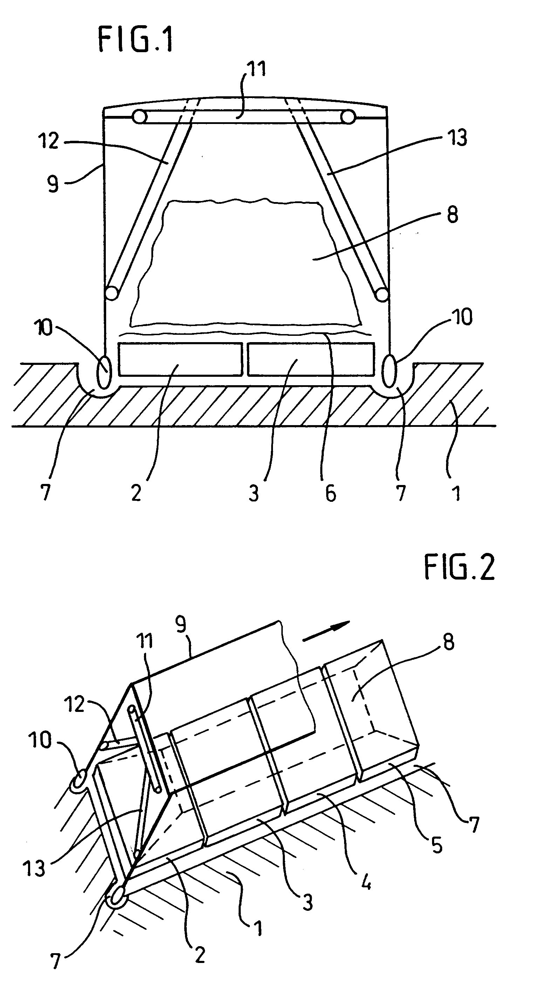

- figure 1 : une vue en coupe d'une réalisation de stockage de déchets solides ou pâteux;
- figure 2 : une vue en perspective de la dite réalisation.

Pour réaliser un stockage de déchets solidifiés, conformément à l'invention, on choisit convenablement un site géographique puis on effectue une stabilisation du sol 1 sur une hauteur d'environ 80 cm à 1 m en ménageant une pente de quelques degrés pour permettre l'évacuation naturelle des eaux pluviales. La stabilisation peut être faite par tout moyen connu, comme par exemple un laitier de haut-fourneau, un ciment Portland ou à la chaux, en utilisant un rotator puis en soumettant à un traitement de vibration et compaction. On peut aussi utiliser pour la stabilisation un déchet ayant des propriétés de liant hydraulique.

Sur le sol stabilisé, on coule en plusieurs fois des séries de dalles en béton de hautes performances désignées ici par 2, 3, 4, 5, qui forment des damiers alignés. Ces dalles peuvent avoir par exemple des longueurs et des largeurs de 15 mètres, avec une profondeur d'au moins un mètre, la longueur totale pouvant être de 90 mètres ou plus. Pour obtenir un béton performant, on met en oeuvre un rapport eau/ciment inférieur à 0,35 en utilisant un fluidifiant lors du gâchage. Le liant peut avantageusement être constitué par un ciment Portland à faible teneur en C3A ou un ciment au laitier, avec addition de particules fines de silice, par exemple de l'ordre de 5 à 10% du poids du ciment. Avantageusement, le béton peut être armé par un ou des treillis métalliques et/ou par des nappes de matière plastique, par exemple en polypropylène, de 2 à 5 cm d'épaisseur selon un dosage de 1 Kg/m3 de béton. Les joints entre dalles sont prévus en matériau hydrophobe comme par exemple du chlorotrifluoréthylène ou copolymère fluoré type CTF2E.

Une fois le radier de béton terminé, on le recouvre avantageusement par un matériau 6, étanche à l'eau et aux liquides agressifs (basiques ou acides). Pour ce faire, on peut mettre en place un géotextile puis appliquer une feuille double de polymère, avantageusement de CTF2E, par exemple de 180 mètres pour un radier de 90 mètres de longueur. On obtient ainsi une isolation d'excellente résistance aux intempéries et à la déchirure. Les propriétés d'inadhérence, d'autonettoyage et de non inflammabilité sont remarquables. Selon une variante, pour éviter d'éventuelles difficultés d'une pose parfaite d'une telle feuille, on peut remplacer cette dernière par un film multicouches de complexe plastique composé de polyéthylène haute densité, de montmorillonite et de caoutchouc butyle. Un tel produit se dilate en cas de fuite d'eau et conduit à la formation de gels qui permettent de sceller les fuites de liquide.

Sur le sol stabilisé et à la périphérie extérieure de l'ensemble des damiers de béton, on a prévu des drains sous la forme d'une cuvette 7 de béton ayant une profondeur d'au moins cinq cm et de largeur par exemple de 0,7 à 1 mètre. Les eaux de pluie sont évacuées par cet ensemble de cuvettes puis rassemblées dans un bassin de rétention (non représenté sur les figures) où des instrumentations analytiques permettent de mesurer et d'enregistrer divers paramètres tels que PH, teneurs en métaux lourds, etc. On dispose ainsi d'outils de mesure pour vérifier que les liquides recueillis sont bien assimilables à de l'eau de pluie.

Les déchets à stocker sont mis en place sur le radier de béton, muni de son étanchéité, sous la forme d'un tumulus 8. En pratique, on effectue cette mise en place dans un coffrage glissant de façon que les déchets constituent peu à peu un trapèze régulier, par exemple de douze mètres de base et cinq mètres de hauteur. Cet apport de déchets 8 est effectué sous la protection d'un pont mobile constitué par un cadre 9 monté sur des roues et pneus 10 et qui se déplace dans la rigole ou cuvette 7 selon l'état d'avancement du front du tumulus. Ce cadre 9 est muni, dans sa partie supérieure, d'un rouleau 11 de film plastique et, sur ses parties latérales, de deux autres rouleaux de matière plastique 12 et 13 inclinés à 45° environ. Il comporte également des équipements de soudure (non représentés) de façon telle que, au fur et à mesure de la constitution du tumulus de déchets, ce dernier puisse être recouvert de trois feuilles de matière plastique dans sa partie supérieure, que l'on soude entre elles et à la feuille horizontale 11. En pratique, il est également avantageux d'utiliser comme matière plastique le copolymère fluoré précité du type CTF2E.

Ainsi, grâce à l'ensemble susdécrit, le tumulus est enfermé dans une enceinte imperméable. Par ailleurs, une feuille de matière plastique de même composition que celle des rouleaux 11, 12, 13 - par exemple en CTF2E - est exposée en permanence aux intempéries sur le site et des tests sont effectués sur celle-ci à espaces réguliers de façon que, dès qu'un léger affaiblissement des propriétés est constaté, les films 11, 12, 13 puissent être changés. Les films de CTF2E peuvent être remplacés par d'autres matériaux équivalents comme, par exemple, par une toile semi-perméable du type GORETEX (marque déposée) lorsqu'on désire encore diminuer la teneur en eau des déchets stockés. Enfin, le même équipement que celui susdécrit peut, bien entendu, être utilisé pour couvrir un ou plusieurs tumulus.

On comprendra ainsi qu'une installation selon l'invention permet de stocker des déchets sans pollution du sol, de l'eau et de l'air. La mise en place des déchets peut être faite par temps de pluie ou de neige et de façon automatique grâce aux équipement mobiles.

L'inspection "de visu" des déchets et de leur évolution est aisée et le stockage s'effectue avec une grande sûreté, le système mis en place pouvant servir de cuve de rétention.

En outre, on peut recueillir toutes les eaux météoriques en un point donné et vérifier leur composition.

Le procédé et l'installation selon l'invention permettent de stocker de nombreux types de déchets dangereux, comme par exemple des boues de filtre-presse ou encore tous les déchets toxiques ayant subi des traitements de solidification selon les techniques connues telles que, notamment, celles des procédés ECOFIX et ASHROCK (marques déposées).

## Revendications

1. Procédé pour le stockage sans pollution et avec possibilité d'inspection et contrôle permanents de déchets solidifiés susceptibles de renfermer des éléments nocifs, caractérisé en ce que, sur un site approprié : a) on stabilise le sol sur une hauteur d'au moins 80 cm par ciment, laitier de haut-fourneau ou équivalent, en ménageant une pente de quelques degrés puis coule un radier de béton à hautes performances selon des dalles de grandes dimensions et d'au moins un mètre d'épaisseur, le pourtour du radier étant entouré d'une cuvette bétonnée qui débouche sur un bassin de rétention; b) on dépose sur le radier les déchets selon une forme de tumulus; c) la mise en place des déchets s'effectue sous la protection d'une couverture mobile comprenant un pont roulant sur des pneus circulant dans ladite cuvette et muni de rouleaux de films de matière plastique comme moyen de couverture.

2. Procédé selon la revendication 1 caractérisé en ce que la stabilisation du sol est faite par un ciment Portland à faible teneur en C3A ou un ciment au laitier avec addition d'ultrafines de silice d'au moins 5% par rapport au ciment ou encore par un déchet solidifié.

3. Procédé selon l'une ou l'autre des revendications 1 ou 2, caractérisé en ce que le béton utilisé pour le radier est armé par un treillis métallique et/ou par des nappes de fibres de matière plastique de haute ténacité, et en ce que le béton est coulé en dalles d'au moins 15 x 15 mètres selon des damiers alignés, avec des joints entres dalles constitués par un polymère à base de chlorotrifluoréthylène.

4. Procédé selon l'une quelconque des revendications 1 à 3, caractérisé en ce que, avant la mise en place des déchets, on dépose sur le radier une feuille de matière plastique étanche à l'eau.

5. Procédé selon la revendication 4, caractérisé en ce que la feuille, mono ou multicouch, utilisée pour la couverture du radier en béton est constituée par un copolymère d'éthylène et de tétrafluoréthylène CTF2E.

6. Procédé selon la revendication 5 caractérisé en ce que l'on interpose entre le béton et ladite feuille, une couche de géotextile.

7. Procédé selon l'une quelconque des revendications 1 à 6, caractérisé en ce que le pont mobile servant de couverture au tumulus de déchets comprend un rouleau de film dans sa partie supérieure et un rouleau incliné à 45° dans chacune des parois latérales, les feuilles horizontales et latérales étant soudées entre elles lors de leur déroulement par un équipement de soudure associé au dit pont.

8. Procédé selon l'une des revendications 1 à 7, caractérisé en ce que ledit bassin de rétention, qui recueille les eaux de pluie s'écoulant dans ladite cuvette, est associé à des instrumentations analytiques permettant de mesurer des paramètres tels que PH, teneur en métaux lourds, etc.

9. Installation pour le stockage de déchets par mise en oeuvre du procédé selon l'une ou l'autre des revendications 1 à 8, comportant sur un sol (1) stabilisé en profondeur : un radier de béton constitué par des plaques de béton (2, 3, 4, 5) jointoyées et disposées en damiers, au moins un matériau d'étanchéité (6) des déchets à stocker mis en place sur le radier (2 à 5), des instruments de mesure et de contrôle analytique, et caractérisée en ce qu'elle comporte en outre un ensemble de pont mobile muni de roues (10) se déplaçant dans une cuvette (7) à la périphérie externe du radier et dont le cadre (9) comporte des rouleaux de films plastiques horizontaux (11) et inclinés ( 12, 13) sur les parois latérales, les déchets étant mis en place sur le radier sous la forme d'un tumulus (8) dans un coffrage glissant et sous la protection progressive du pont mobile, le matériau d'étanchéité étant appliqué sur le radier, et ladite cuvette (7) étant reliée à un bassin de rétention où sont prévus les instruments de mesure et contrôle analytique.

## Claims

1. Method for the pollution-free storage, with the possibility of continuous inspection and monitoring, of solidified waste which may include harmful matter, characterised in that, on a suitable site: a) the ground is stabilised over a height of at least 80 cm by means of cement, blast-furnace slag or equivalent, providing a slope of a few degrees, and then a high-performance concrete platform is poured, in large slabs at least one metre thick, the periphery of the platform being surrounded by a concreted trough opening out into a retention basin; b) the waste is deposited on the platform in a tumulus shape; c) the waste is put in place under the protection of a mobile cover comprising a travelling gantry on tyres running in the said trough and provided with rolls of plastic film as a covering means.

2. Method according to Claim 1, characterised in that the ground is stabilised by means of a Portland cement with a low C3A content or a slag cement with the addition of silica ultrafines in a proportion of at least 5% with respect to the cement, or again by means of a solidified waste.

3. Method according to one or other of Claims 1 or 2, characterised in that the concrete used for the platform is reinforced by means of a metal mesh and/or by means of sheets of high-strength plastic fibres, and in that the concrete is poured in slabs measuring at least 15 x 15 metres in aligned check patterns, with joints between slabs formed by a chlorotrifluoroethylene-based polymer.

4. Method according to any one of Claims 1 to 3, characterised in that, before the waste is put in place, a sheet of waterproof plastic material is placed on the platform.

5. Method according to Claim 4, characterised in that the single- or multilayer sheet used for covering the concrete platform consists of a copolymer of ethylene and tetrafluoroethylene CTF2E.

6. Method according to Claim 5, characterised in that a geotextile layer is interposed between the concrete and the said sheet.

7. Method according to any one of Claims 1 to 6, characterised in that the mobile gantry serving to cover the waste tumulus comprises a roll of film in its upper part and a roll inclined at 45° in each of the lateral walls, the horizontal and lateral sheets being welded together when they are unwound by welding equipment associated with the said gantry.

8. Method according to one of Claims 1 to 7, characterised in that the said retention basin, which collects the rainwater discharging in the said trough, is associated with analytical instrumentation enabling parameters such as pH, heavy metal content, etc to be measured.

9. Installation for storing waste by implementation of the method according to one or other of Claims 1 to 8, including on depth-stabilised ground (1): a concrete platform formed by concrete panels (2, 3, 4, 5) pointed and disposed in a check pattern, at least one material (6) for sealing the waste to be stored and put in place on the platform (2 to 5), and measuring and analytical-monitoring instruments, and characterised in that it also includes a mobile gantry unit fitted with wheels (10) moving in a trough (7) at the outer periphery of the platform and the framework (9) of which includes horizontal (11) and inclined (12, 13) rolls of plastic film on the lateral walls, the waste being put in place on the platform in the form of a tumulus (8) in sliding formwork and under the progressive protection of the mobile gantry, the sealing material being applied to the platform, and the said trough (7) being connected to a retention basin in which the measuring and analytical-monitoring instruments are provided.

## Patentansprüche

1. Verfahren zum Lagern von verfestigten, möglicherweise Schadstoffe enthaltenden Abfällen ohne Umweltbelastung, das die Moglichkeit standiger Inspektionen und Kontrollen bietet, dadurch gekennzeichnet, daß in einem geeigneten Gelände: a) man den Boden auf einer Höhe von mindestens 80 cm mit Zement, Hochofenschlacke oder dergleichen stabilisiert, wobei eine wenige Grad starke Neigung vorgesehen wird, und dann eine Sohle aus Hochleistungsbeton entlang groß er und mindestens einen Meter dicker Platten gießt, wobei um den Umfang der Sohle eine betonierte Rinne verläuft, die in ein Ruckhaltebecken mündet; b) man die Abfälle in Tumulusform auf der Sohle verteilt; c) das Verteilen der Abfalle unter dem Schutz einer beweglichen Abdeckung erfolgt, die aus einem Laufkran besteht, der auf Rädern in der genannten Rinne umlauft und mit Plastikfolienrollen als Abdeckvorrichtung versehen ist.

2. Verfahren nach Anspruch 1, dadurch gekennzeichnet, daß die Bodenstabilisierung mit einem Portland-Zement mit geringem C3A-Gehalt oder einem Schlackenzement, dem mindestens 5 % feinster Kieselerdeteilchen bezogen auf den Zement beigemischt sind, oder auch mit verfestigtem Abfall erfolgt.

3. Verfahren nach Anspruch 1 oder 2, dadurch gekennzeichnet, daß der für die Sohle verwendete Beton mit einem Metallgitter und/oder Fasermatten aus Kunststoff hoher Festigkeit armiert ist, und daß der Beton in Platten von mindestens 15 x 15 Meter in gefluchteter Schachbrettform gegossen wird und die Fugen zwischen den Platten aus einem Polymer auf Chlortrifluorethylenbasis bestehen.

4. Verfahren nach einem der Ansprüche 1 bis 3, dadurch gekennzeichnet, daß vor dem Verteilen der Abfälle auf der Sohle eine wasserdichte Plastikfolie ausgelegt wird.

5. Verfahren nach Anspruch 4, dadurch gekennzeichnet, daß die zum Abdecken der Betonsohle verwendete, ein- oder mehrschichtige Folie aus einem Ethylen- und CTF2E-Tetrafluorethylenkopolymer besteht.

6. Verfahren nach Anspruch 5, dadurch gekennzeichnet, daß zwischen dem Beton und der besagten Folie eine Geotextilschicht aufgebracht wird.

7. Verfahren nach einem der Ansprüche 1 bis 6, dadurch gekennzeichnet, daß der zum Abdecken des Abfalltumulus dienende bewegliche Kran in seinem oberen Teil eine Rolle Folie und in jeder seiner Seitenwände eine um 45° geneigte Rolle aufweist, wobei die horizontalen und seitlichen Folien bei ihrem Abrollen mittels einer mit diesem Kran verbundenen Schweißausrüstung miteinander verschweißt werden.

8. Verfahren nach einem der Ansprüche 1 bis 7, dadurch gekennzeichnet, daß das genannte Rückhaltebecken, welches das in die genannte Rinne abfließende Regenwasser auffängt, mit analytischen Instrumenten verbunden ist, mit denen man Parameter wie den pH-Wert, Schwermetallgehalt, etc. messen kann.

9. Vorrichtung zum Lagern von Abfällen unter Einsatz des Verfahrens nach einem der Ansprüche 1 bis 8, mit auf einem tiefenstabilisierten Boden (1): einer aus verfugten und schachbrettartig angeordneten Betonplatten (2, 3, 4, 5) bestehenden Betonsohle, mindestens Dichtmaterial (6) fur die zu lagernden, auf der Sohle (2 bis 5) verteilten Abfälle, analytischen Meß- und Kontrollinstrumenten, und dadurch gekennzeichnet, daß sie eine Einheit aus einem mit Rollen (10) versehenen Laufkran umfaßt, der in einer Rinne (7) am äußeren Umfang der Sohle hin- und herfährt, und dessen Rahmen (9) horizontal angeordnete (11) und an den Seitenwänden schräg verlaufende (12, 13) Plastikfolienrollen aufweist, wobei die Abfälle auf der Sohle in Form eines Tumulus (8) in einer Gleitschalung und unter dem zunehmenden Schutz des Laufkrans abgeladen werden, das Dichtmaterial auf die Sohle aufgebracht wird und die genannte Rinne (7) mit einem Ruckhaltebecken verbunden wird, in dem die analytischen Kontroll- und Meßinstrumente vorgesehen sind.
